Europäisches Patentamt

European Patent Office

Office européen des brevets

(11) Veröffentlichungsnummer: **0 249 875**
**A2**

## (12) EUROPÄISCHE PATENTANMELDUNG

(21) Anmeldenummer: 87108404.2

(51) Int. Cl.4: **B62B 9/12**

(22) Anmeldetag: 10.06.87

(30) Priorität: 16.06.86 DE 3620287

(43) Veröffentlichungstag der Anmeldung:
23.12.87 Patentblatt 87/52

(84) Benannte Vertragsstaaten:
AT BE CH DE ES FR GB IT LI LU NL

(71) Anmelder: **Beger, Udo**
**Oberbreitenauer Strasse 27**
**D-8300 Landshut(DE)**

(72) Erfinder: **Beger, Udo**
**Oberbreitenauer Strasse 27**
**D-8300 Landshut(DE)**

(74) Vertreter: **Patentanwälte Grünecker,**
**Kinkeldey, Stockmair & Partner**
**Maximilianstrasse 58**
**D-8000 München 22(DE)**

(54) **Kinderwagen.**

(57) Ein erfindungsgemäßer Kinderwagen weist eine an einem Fahrgestell befestigbare Wanne (1) mit einem Wannengestell (2) auf, in das ein innerer Wannenbezug (4) eingesetzt werden kann, der bei Bedarf aus dem Wannengestell (2) herausgenommen werden kann. In einer besonders bevorzugten Ausführungsform weist der erfindungsgemäße Kinderwagen ferner ein Verdeck (14) mit einem vom Verdeckgestell (15) abnehmbaren Verdeckbezug (16) auf. Im Gegensatz zu bekannten Kinderwagen weist der erfindungsgemäße Kinderwagen den besonderen Vorteil auf, daß der Wannenbezug (4), wie auch in der bevorzugten Ausführungsform der Verdeckbezug (16) jederzeit ohne große Mühe vom Wannengestell (2) bzw. Verdeckgestell (15) gelöst werden kann und damit insbesondere bei häufig auftretenden starken Verunreinigungen vollständig gereinigt werden kann.

FIG.1

EP 0 249 875 A2

## Kinderwagen

Die Erfindung betrifft einen Kinderwagen nach dem Oberbegriff des Anspruchs 1.

Übliche Kinderwagen weisen ein Fahrgestell auf, an dem eine Wanne befestigt ist, in die das Kind gelegt wird. Die Wanne ist aus einem Wannengestell und einem Wannenbezug aufgebaut, der in das Innere des Wannengestells eingebracht wird. Ferner weist die Wanne ein Verdeck auf, dessen Verdeckgestell am Wannengestell angelenkt ist und über das ein Verdeckbezug gespannt ist.

Ein wesentlicher Nachteil der bisher bekannten Kinderwagen besteht darin, daß der Wannenbezug beispielsweise durch Vernähen fest mit dem Wannengestell verbunden ist, so daß die häufig auftretenden und oft starken Verschmutzungen des Wannenbezuges meist nur ungenügend durch Auswischen entfernt werden können.

Dies trifft ebenso für den Verdeckbezug zu, der bei bekannten Kinderwagen ebenfalls fest mit dem Verdeckgestell verbunden ist, so daß auch dessen Verunreinigungen, wenn überhaupt, meist nur ungenügend beseitigt werden können.

Es ist zwar ein Kinderwagen bekannt, der eine als Tragetasche ausgebildete Wanne aufweist, die wiederum in eine am Fahrgestell des Kinderwagens befestigte ebenfalls wannenförmig ausgebildete Aufnahmeeinrichtung eingesetzt wird, jedoch weist dieser Kinderwagen den Nachteil einer erheblich aufwendigeren Konstruktion auf und darüber hinaus ist der Wannenbezug der herausnehmbaren Wanne wiederum fest mit dem Wannengestell verbunden, so daß letztendlich im Hinblick auf die auftretenden Verschmutzungen keine Vorteile gegenüber den sonst üblichen Kinderwagen mit fest mit dem Fahrgestell verbundener Wanne erzielt werden können.

Es ist demgegenüber Aufgabe der vorliegenden Erfindung, einen Kinderwagen der im Oberbegriff des Anspruchs 1 angegebenen Art zu schaffen, der es ermöglicht, insbesondere den inneren Wannenbezug bei Bedarf jederzeit einer gründlichen Reinigung, wie beispielsweise durch Waschen in einer Waschmaschine, unterziehen zu können.

Diese Aufgabe wird bei dem Kinderwagen gemäß dem Oberbegriff des Anspruchs 1 durch die kennzeichnenden Merkmale des Hauptanspruches gelöst.

Dadurch wird erreicht, daß der innere Wannenbezug bei Bedarf jederzeit dem Wannengestell entnommen werden kann, so daß auch die Beseitigung starker Verschmutzungen durch eine vollständige Reinigung, beispielsweise durch Waschen in einer Waschmaschine, erzielt werden kann. Hierbei kann der Wannenbezug flexibel ausgebildet sein, da er im in das formstabile Wannengestell eingesetzten Zustand seine topfähnliche Form einnimmt, ohne selbst formstabil sein zu müssen.

Ein weiterer Vorteil, der sich aus dem jederzeit herausnehmbaren Wannenbezug ergibt, ist darin zu sehen, daß dieser im Falle von nicht reparablen Zerstörungen auf einfache und kostengünstige Art und Weise gegen einen neuen Wannenbezug ausgetauscht werden kann, ohne daß hierfür aufwendige Arbeiten, wie beispielsweise das Trennen eines fest mit dem Wannengestell verbundenen Bezuges, erforderlich wären. Dies wiederum ergibt den Vorteil, daß sich die gesamte Lebensdauer des erfindungsgemäßen Kinderwagens erheblich erhöhen läßt, da der einem relativ hohen Verschleiß unterworfene Wannenbezug, wie gesagt, - schnell, einfach und kostengünstig gegen einen neuen Bezug ausgetauscht werden kann.

Aufgrund der einfachen Montage des Wannenbezuges im Wannengestell ergeben sich natürlich auch Vorteile bei der Herstellung des erfindungsgemäßen Kinderwagens, da aufwendige Arbeiten zur bleibenden Befestigung des Bezuges entfallen und somit die Montagezeit und folglicherweise die Herstellungskosten herabgesetzt werden können.

Die Unteransprüche haben vorteilhafte Weiterbildungen der Erfindung zum Inhalt.

Ist der Verdeckbezug als vom Verdeckgestell abnehmbarer Bezug ausgebildet, ergibt sich der Vorteil, daß auch dieses Teil des erfindungsgemäßen Kinderwagens bei Bedarf problemlos abnehmbar ist, so daß auch der Verdeckbezug auf einfache Art und Weise und gründlich gereinigt werden kann, wie es auch möglich ist, bei irreparablen Beschädigungen den Verdeckbezug schnell und einfach gegen einen neuen Bezug auszuwechseln.

Zur Befestigung des abnehmbaren Verdeckbezuges am Verdeckgestell wird der die Öffnung umrahmende Rand des Bezuges an einem entsprechend ausgebildeten Bügel des Verdeckgestelles mittels geeigneter Befestigungseinrichtungen angebracht und, bei einer weiteren bevorzugten Ausführungsform, kann der Verdeckbezug an seinem unteren Rand mit dem Teil des oberen Randes des Wannenbezuges verbunden werden, der dem unteren Rand des Verdeckbezuges gegenüberliegend angeordnet ist. Daraus ergibt sich der Vorteil, daß trotz der Abnehmbarkeit des Verdeckbezuges in dem Bereich der Wanne, in dem der Kopf des in die Wanne gelegten Kindes liegt, vollständig abgedichtet ist.

Eine besonders einfache Befestigungsmöglichkeit des Wannenbezuges im Wannengestell ergibt sich dann, wenn der obere Rand des Wannenbezuges ausgestülpt ist und im in die Wanne eingesetzten Zustand den oberen Rand des Wannengestells umgreift und auf diese Art und Weise im Wannengestell festgelegt wird.

Desweiteren ist es möglich, das Wannengestell bei eingesetztem inneren Wannenbezug von außen sichtbar zu belassen als auch zur Abdeckung des Wannengestells einen äußeren Wannenbezug vorzusehen, der vorzugsweise mit dem oberen Rand des inneren Wandbezuges durch geeignete Befestigungseinrichtungen verbunden werden kann.

Bei einer weiteren bevorzugten Ausführungsform kann der innere Wannenbezug wattiert sein, was den Vorteil ergibt, daß das formstabile Wannengestell abgepolstert wird, so daß keine Verletzungsgefahr für das in die Wanne gelegte Kind besteht. Ferner ergibt sich bei dieser bevorzugten Ausführungsform der Vorteil, daß keine zusätzlichen Einlagematten erforderlich sind, da die Wattierung eine ausreichende Polsterung ermöglicht. Hierbei können sowohl die Seitenwände als auch die Bodenwand des inneren Wannenbezuges wattiert werden, wobei in besonders vorteilhafter Weise die Seiten-und Bodenwände einstückig miteinander verbunden sein können.

Um eine gute Unterstützung des weichen, insbesondere wattierten inneren Wannenbezuges zu gewährleisten, kann das Wannengestell als vorzugsweise kunststoffbeschichtetes Drahtgitter ausgebildet sein, wobei sich die gute Abstützung und die daraus resultierende Erhöhung des Liegekomforts aus dem geringen Abstand zwischen den einzelnen Drähten des Drahtgitters ergibt. Ein derartiges Wannengestell kann in ähnlicher Form wie bekannte Einkaufskörbe ausgebildet sein und ist vorzugsweise aus kunststoffbeschichteten Runddrähten mit 3 mm Durchmesser aufgebaut.

Bei einer besonders bevorzugten Ausführungsform des erfindungsgemäßen Kinderwagens ist der Verdeckbezug sackförmig ausgebildet, so daß der die Öffnung des Verdecks umrahmende Bügel des Verdeckgestelles in die sackartige Tasche dieser Verdeckbezugausführung eingeführt und nach Verschließen der Öffnung der sackartigen Tasche im Verdeckbezug festgelegt werden kann. Diese Ausführungsform des Verdeckbezuges stellt eine besonders einfach am Verdeckgestell zu befestigende Konstruktion dar, wobei als Verbindungseinrichtung beispielsweise ein Reißverschluß, jedoch auch Klettverschlüsse, Druckknöpfe oder ähnliche leicht verschließbare und lösbare Verbindungseinrichtungen vorgesehen sein können.

Diese Art der Verbindungseinrichtung kann auch zur Befestigung des inneren Wannenbezuges an einem ggf. vorgesehenen äußeren Wannenbezug vorgesehen sein, wie auch an der Befestigungsstelle zwischen dem unteren Rand des Verdeckbezuges und dem inneren Wannenbezug.

Wenn der erfindungsgemäße Kinderwagen mit einem abnehbaren Verdeckbezug versehen ist, was im Zusammenhang mit dem abnehmbaren Wannenbezug eine besonders bevorzugte und vorteilhafte Ausführungsform darstellt, ergeben sich weitere besondere Vorteile bei Verwendung einer Befestigungseinrichtung zur Anlenkung des Verdeckgestelles am Wannengestell, die zwei verzahnte Scheiben aufweist, von denen jeweils eine am Wannengestell und die jeweils andere am Verdeckgestell befestigt wird. Hierbei sind die beiden verzahnten Scheiben an den jeweiligen Teilen des Wannen-bzw. Verdeckgestelles verdrehfest angeordnet und weisen mittige Ausnehmungen auf, die von einer Gewindestange einer Rändelschraube durchgriffen werden. Diese Rändelschraube ist federbelastet, so daß bei gelöster Rändelschraube die Feder die aufeinandergedrückten Scheiben auseinanderbewegt, so daß die Verzahnungen außer Eingriff gelangen. In diesem Zustand kann der entsprechende Bügel des Verdeckgestelles in die gewünschte Stellung geschwenkt werden, wonach die Rändelschraube wieder angezogen wird, so daß die Verzahnungen in Eingriff gelangen und die eingestellte Stellung des Bügels des Verdeckgestelles fixiert wird. Hierbei ist es möglich, sowohl an beiden als auch nur an einer der Verbindungsstellen zwischen dem Verdeckgestell und dem Wannengestell die zuvor beschriebene Befestigungseinrichtung vorzusehen. Der besondere Vorteil, der sich aus dieser Ausführungsform ergibt, ist darin zu sehen, daß das Vorsehen einer sogenannten Sturmspreize zum Spannen des Verdeckbezuges vermieden werden kann, was die Verdeckkonstruktion erheblich vereinfacht.

Weitere Einzelheiten, Merkmale und Vorteile der Erfindung ergeben sich aus nachfolgender Beschreibung von Ausführungsbeispielen anhand der Zeichnung.

Es zeigt:

Fig. 1 eine perspektivische, leicht vereinfachte Darstellung einer ersten Ausführungsform einer Wanne eines erfindungsgemäßen Kinderwagens,

Fig. 2 eine Darstellung der Wanne gemäß Fig. 1 aus Richtung der Pfeile II-II in Fig. 1,

Fig. 3 eine der Fig. 1 entsprechende Darstellung einer bevorzugten Ausführungsform eines Verdeckbezuges des erfindungsgemäßen Kinderwagens, und

Fig. 4 eine Seitenansicht einer zweiten Ausführungsform eines Verdecks des erfindungsgemäßen Kinderwagens

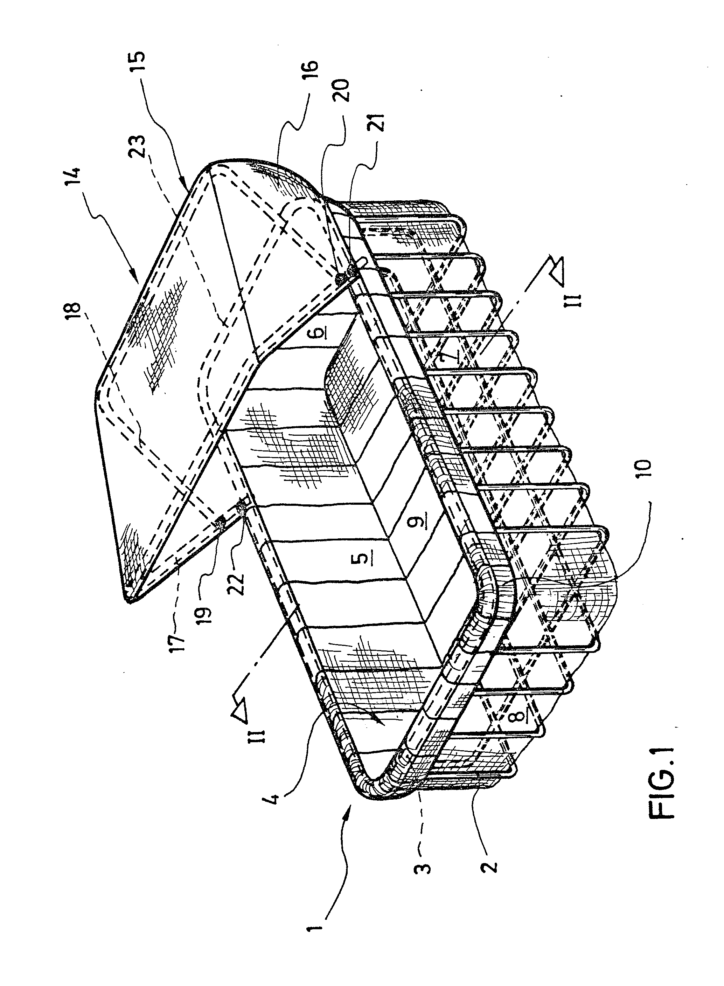

Gemäß Fig. 1 ist eine Wanne 1 eines erfindungsgemäßen Kinderwagens dargestellt, dessen Fahrgestell und sonstige Teile nicht zeichnerisch veranschaulicht sind, da diese in üblicher Art und Weise ausgebildet sein können.

Die Wanne 1 weist ein Wannengestell 2 auf, das bei der in Fig. 1 dargestellten Ausführungsform als Drahtgitter mit sich vorzugsweise im rechten Winkel kreuzenden Längs-und Querdrähten ausgebildet ist. Das Wannengestell 2 weist im Beispielsfalle einen oberen umlaufenden geschlossenen und in seinen Eckbereichen abgerundeten Rand 3 auf, und ist als korbähnliches formstabiles Gestell ausgebildet.

Wie aus Fig. 1 ersichtlich ist, ist in das Wannengestell 2 ein Wannenbezug 4 eingelegt, der in diesem Zustand eine der Form des Wannengestells 2 entsprechende topfähnliche Form einnimmt und vier Seitenwände 5 bis 8 und eine Bodenwand 9 aufweist. Bei der in Fig. 1 dargestellten, besonders bevorzugten Ausführungsform, sind die Seitenwände 5 bis 8 einstückig untereinander und mit der Bodenwand 9 verbunden, so daß der Wannenbezug 4 ein einheitliches Teil darstellt, das auf einfache Art und Weise in das Wannengestell 2 eingesetzt und aus diesem wieder entnommen werden kann.

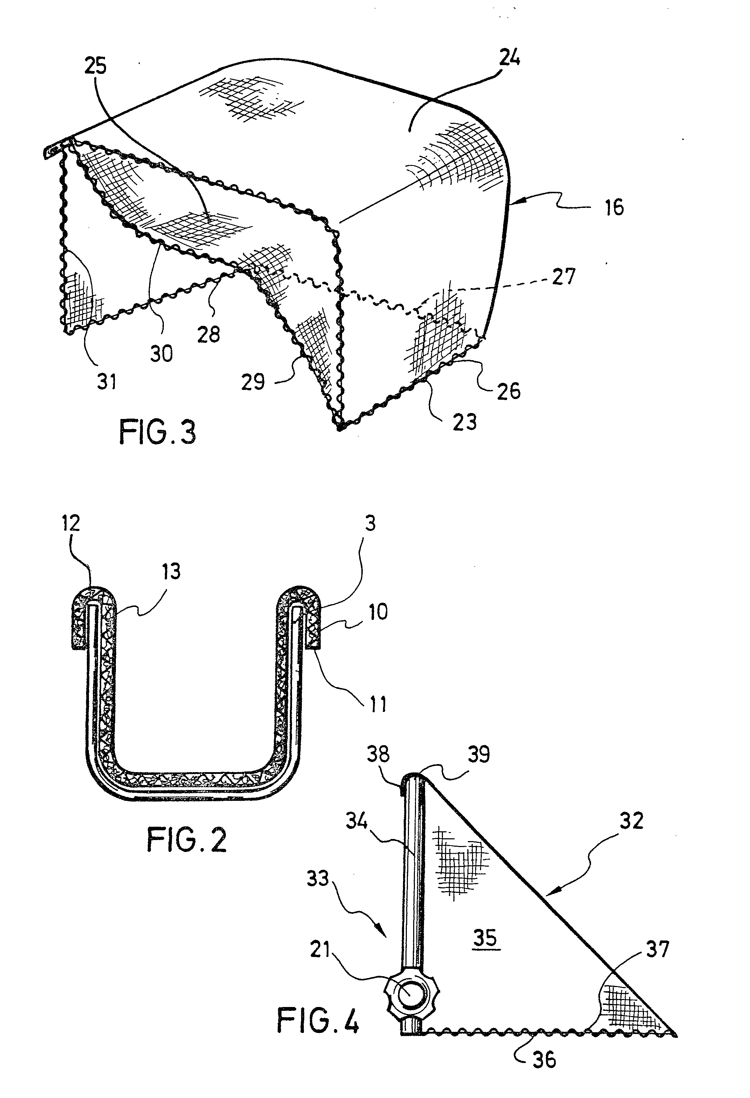

Hierbei ist insbesondere aus Fig. 2 ersichtlich, daß ein oberer Randbereich 10 des Wannenbezugs 4 den oberen Rand 3 des Wannengestells 2 umgreift, da er ausgestülpt ist. Dies stellt eine besonders einfache Art und Weise der Befestigung des Wannenbezugs 4 am Wannengestell 2 dar.

Um in Fig. 1 die drahtkorbähnliche Ausbildung des Wannengestells 2 verdeutlichen zu können, ist die Wanne 1 nicht mit einem Außenbezug versehen, der das Wannengestell 2 abdecken würde. Dies ist jedoch möglich, wobei dann der äußere Wannenbezug beispielsweise an der gemäß Fig. 2 nach unten weisenden Stirnfläche 11 des oberen Randbereiches 10 des Wannenbezuges 4 befestigt werden kann, wozu beispielsweise ein Reißverschluß vorgesehen sein kann. Ein derartiger äußerer Wannenbezug kann dann sowohl die Seitenflächen als auch die untere Bodenfläche des Wannengestelles 2 bedecken, so daß dieses vollständig unsichtbar ist.

Aus Fig. 2 ist ferner ersichtlich, daß der Wannenbezug 4 doppelwandig ausgebildet ist und sein Inneres beispielsweise mit einer Watteschicht 12 gefüllt sein kann. Um zu verhindern, daß beim Waschen des Wannenbezugs 4 die Füllung verrutscht und/oder verklumpt, kann der Wannenbezug 4 versteppt sein, was in Fig. 2 durch die schematisch vereinfachten Steppnähte 13 angedeutet ist.

Wie aus Fig. 1 ferner ersichtlich ist, weist die Wanne 1 des erfindungsgemäßen Kinderwagens ferner ein Verdeck 14 auf, das ein Verdeckgestell 15 und einen Verdeckbezug 16 umfaßt. Das Verdeckgestell 15 weist im Beispielsfalle einen Öffnungsbügel 17 und einen Spannbügel 18 auf. Der Spannbügel 18 ist hierbei gelenkig am Öffnungsbügel 17 mit Hilfe geeigneter Befestigungseinrichtungen 19 und 20 angelenkt, die in Fig. 1 schematisch dargestellt und in üblicher Art und Weise ausgebildet sind.

Der Öffnungsbügel 17, wie auch der Spannbügel 18, ist im wesentlichen U-förmig ausgebildet und ist an den Enden seiner parallelen Schenkel über Befestigungseinrichtungen 21 bzw. 22 am oberen Rand 3 des Wannengestells 2 - schwenkbeweglich angelenkt. Die in Fig. 1 lediglich schematisch dargestellten Befestigungseinrichtungen 21 und 22 ermöglichen eine verstellbare Fixierung des Bügels 17 und sind in der eingangs beschriebenen Art und Weise ausgebildet, was den Vorteil ergibt, daß sogenannte Sturmpreizen zum Spannen des Verdeckbezuges 16 entfallen können.

Um die Anbringung der Befestigungseinrichtungen 21 und 22 zu ermöglichen, ist der ausgestülpte obere Randbereich 10 des Wannenbezugs 4 an den entsprechenden Anlenkungsstellen des Bügels 17 am Wannengestell 2 entweder mit einer Ausnehmung zum Durchtritt der Rändelschraube der Befestigungseinrichtungen 21 bzw. 22 versehen bzw. weist eine Ausbuchtung auf, so daß die Anlenkung des Bügels 17 am Wannengestell 2 problemlos möglich ist.

Ferner ist aus Fig. 1 ersichtlich, daß der untere Rand 23 des Verdeckbezuges 16 mit dem oberen Randbereich 10 des Wannenbezugs 4 verbunden werden kann, wozu beispielsweise ein Reißverschluß vorgesehen sein kann, der in Fig. 3 umlaufend um den gesamten unteren Rand 23 schematisch vereinfacht dargestellt ist.

Zur Befestigung des Verdeckbezuges 16 am Öffnungsbügel 17 kann der Verdeckbezug 16, wie in Fig. 3 dargestellt, beispielsweise sackförmig ausgebildet sein. Bei dieser Ausführungsform weist der Verdeckbezug 16 eine äußere beispielsweise vierseitige Plane 24 auf, in die ein Innenfutter 25 eingesetzt ist. Dieses Innenfutter 25 weist die gleiche Form wie die äußere Plane 24 auf und ist an ihren unteren drei innenliegenden Seiten 26, 27 und 28 mit den entsprechenden benachbarten Bereichen der Plane 24 beispielsweise durch Vernähen verbunden. Die vorderen Ränder 29, 30 und 31 des Innenfutters 25 hingegen sind über eine geeignete Verwendungseinrichtung, wie beispielsweise ebenfalls einen Reißverschluß, mit den entsprechenden benachbarten Bereichen der Plane 24 lösbar verbunden, so daß bei Aufziehen der Verbindungseinrichtung das Innenfutter in seinem vorderen Bereich von der Plane 24 gelöst werden kann, wie dies in Fig. 3 veranschaulicht ist. In die sich bei gelöstem Innenfutter 25 ergebende Öffnung kann der Bügel 17 eingesetzt werden, wonach beispielsweise der vorgesehene Reißverschluß geschlossen werden kann, so daß sich der Bügel 17 vollständig im Innenraum zwischen Plane 24 und Innenfutter 25 befindet und so mit dem Verdeckbezug 16 verbunden ist und die Öffnung des Verdeckes 14 bildet. Diese Konstruktion ergibt insbesondere deshalb Vorteile, weil der Bügel 17 sicher gehalten wird, da er vollständig zwischen dem Innenfutter 25 und der Plane 24 eingeschlossen ist und so, beispielsweise beim Auftreten von Erschütterungen nicht herausrutschen kann.

Gemäß Fig. 4 ist eine Ausführungsform eines Verdecks 32 dargestellt, das ebenfalls bei dem erfindungsgemäßen Kinderwagen in Verbindung mit einem herausnehmbaren Wannenbezug vorgesehen sein kann. Dieses Verdeck 32 weist ein Verdeckgestell 33 auf, das lediglich einen Öffnungsbügel 34 umfaßt, der in Fig. 4 in Seitenansicht dargestellt ist, und eine U-förmige Form gemäß dem Bügel 17 der Ausführungsform nach Fig. 1 aufweisen kann. Dieser Bügel 34 kann ebenfalls in der im Zusammenhang mit Fig. 1 erläuterten Art und Weise an dem Wannengestell 2 befestigt werden. Das Verdeck 32 weist ferner einen Verdeckbezug 35 auf, dessen unterer Rand 36 ebenfalls eine Verbindungseinrichtung 37 aufweisen kann, damit er mit dem oberen Rand des Wannenbezugs 4 verbunden werden kann. Der Verdeckbezug 35 der Ausführungsform gemäß Fig. 4 ist nicht sackförmig ausgebildet, sondern weist einen umgestülpten vorderen Öffnungsrand 38 auf, der den oberen Rand 39 des Bügels 34 umgreift und damit im Bereich der Öffnung des Verdeckes 35 am Bügel 34 festgelegt ist. Bei der Ausführungsform gemäß Fig. 4 wurde auf das Vorsehen eines Spannbügels verzichtet, da dieser nur dann erforderlich ist, wenn das Verdeck eine ausgebauchte Form aufweisen soll, was jedoch nicht in allen Fällen erforderlich bzw. erwünscht ist. Um eine ausreichende Haltekraft des um gestülpten Randes 38 des Verdeckbezuges 35 zu gewährleisten, kann dieser durch geeignete Mittel verstärkt sein, wie beispielsweise eine elastische Metalleinlage oder ähnliches.

Ergänzend sei noch darauf hingewiesen, daß der Bereich des Wannenbezuges 4, der nicht vom Verdeck 14 bzw. 32 abgedeckt wird, zusätzlich mit einem in den Figuren nicht näher dargestellten planenartigen Regenschutz versehen sein kann, der beispielsweise am oberen Randbereich 10 des Wannenbezuges 4 mittels geeigneter Verbindungseinrichtungen befestigt werden kann.

## Ansprüche

1. Kinderwagen mit einem Fahrgestell und einer daran befestigten Wanne, die ein Wannengestell mit einem inneren Wannenbezug aufweist und an der ein Verdeck angebracht ist, das ein am Wannengestell angelenktes Verdeckgestell aufweist, das von einem Verdeckbezug überspannt ist, **dadurch gekennzeichnet,** daß der Wannenbezug (4) in das als formstabiles Gestell ausgebildete Wannengestell (2) einsetzbar und aus diesem wieder herausnehmbar ist.

2. Kinderwagen nach Anspruch 1, **dadurch gekennzeichnet,** daß der Verdeckbezug (16; 35) als vom Verdeckgestell (15; 33) abnehmbarer Bezug ausgebildet ist.

3. Kinderwagen nach Anspruch 1 oder 2, **dadurch gekennzeichnet,** daß der Verdeckbezug (16; 35) an seinem unteren Rand (23; 36) mit dem diesem benachbart angeordneten Teil des oberen Randbereiches (10) des Wannenbezuges (4) verbindbar ist.

4. Kinderwagen nach einem der Ansprüche 1 bis 3, **dadurch gekennzeichnet,** daß der obere Randbereich (10) des inneren Wannenbezugs (4) ausgestülpt ist und im in die Wanne (1) eingesetzten Zustand den oberen Rand (3) des Wannengestells (2) umgreift .

5. Kinderwagen nach einem der Ansprüche 1 bis 4, **dadurch gekennzeichnet,** daß der innere Wannenbezug (4) mit einem äußeren Wannenbezug verbindbar ist.

6. Kinderwagen nach einem der Ansprüche 1 bis 5, **dadurch gekennzeichnet,** daß der innere Wannenbezug (4) wattiert ist.

7. Kinderwagen nach Anspruch 6, **dadurch gekennzeichnet,** daß der innere Wannenbezug (4) versteppt ist.

8. Kinderwagen nach einem der Ansprüche 1 bis 7, **dadurch gekennzeichnet,** daß das Wannengestell (2) als vorzugsweise kunstoffbeschichtetes Drahtgitter ausgebildet ist.

9. Kinderwagen nach einem der Anpsrüche 1 bis 8, **dadurch gekennzeichnet,** daß der Verdeckbezug (16) sackförmig ausgebildet ist.

10. Kinderwagen nach einem der Ansprüche 1 bis 9 **dadurch gekennzeichnet,** daß als Verbindungseinrichtung zwischen innerem Wannenbezug (4) und äußerem Wannenbezug bzw. zwischen innerem Wannenbezug (4) und Verdeckbezug (16;35) Reißverschlüsse vorgesehen sind.

11. Kinderwagen nach einem der Ansprüche 1 bis 10, **dadurch gekennzeichnet,** daß eine Befestigungseinrichtung (21, 22) zur Anlenkung des Verdeckgestelles (15; 33) am Wannengestell (2) zwei verzahnte Scheiben aufweist, von denen jeweils eine am Wannengestell (2) und die jeweils andere am Verdeckgestell (15; 33) befestigt ist und deren Verzahnungen mittels einer federbelasteten Rändelschraube in Eingriff bringbar sind, wenn die Rändelschraube angezogen ist, bzw. durch die Federwirkung bei gelöster Rändelschraube außer Eingriff bringbar sind.

FIG.1

FIG.3

FIG.2

FIG.4